Europäisches Patentamt

European Patent Office

Office européen des brevets

(19)

(11) Numéro de publication : **0 083 527**
**B1**

(12) # FASCICULE DE BREVET EUROPÉEN

(45) Date de publication du fascicule du brevet :
16.04.86

(51) Int. Cl.⁴ : **G 02 B 6/42**

(21) Numéro de dépôt : **82402344.4**

(22) Date de dépôt : **21.12.82**

(54) **Dispositif de couplage entre une source lumineuse à rayonnement divergent et une fibre optique.**

(30) Priorité : **31.12.81 FR 8124562**

(43) Date de publication de la demande :
**13.07.83 Bulletin 83/28**

(45) Mention de la délivrance du brevet :
**16.04.86 Bulletin 86/16**

(84) Etats contractants désignés :
**DE IT NL SE**

(56) Documents cités :
**EP-A- 0 014 610
DE-A- 2 554 705
DE-A- 2 805 358
FR-A- 1 301 972
FR-A- 1 543 165
FR-A- 2 178 173**

(73) Titulaire : **THOMSON-CSF
173, Boulevard Haussmann
F-75379 Paris Cedex 08 (FR)**

(72) Inventeur : **Richin, Philippe
THOMSON-CSF SCPI 173, bld Haussmann
F-75379 Paris Cedex 08 (FR)**
Inventeur : **Carballes, Jean-Claude
THOMSON-CSF SCPI 173, bld Haussmann
F-75379 Paris Cedex 08 (FR)**
Inventeur : **Combemale, Yves
THOMSON-CSF SCPI 173, bld Haussmann
F-75379 Paris Cedex 08 (FR)**
Inventeur : **d'Aurla, Luigi
THOMSON-CSF SCPI 173, bld Haussmann
F-75379 Paris Cedex 08 (FR)**
Inventeur : **Maillot, Philippe
THOMSON-CSF SCPI 173, bld Haussmann
F-75379 Paris Cedex 08 (FR)**
Inventeur : **Moronvalle, Chantal
THOMSON-CSF SCPI 173, bld Haussmann
F-75379 Paris Cedex 08 (FR)**
Inventeur : **Simon, Jacques
THOMSON-CSF SCPI 173, bld Haussmann
F-75379 Paris Cedex 08 (FR)**

(74) Mandataire : **Lepercque, Jean et al
THOMSON-CSF SCPI 19, avenue de Messine
F-75008 Paris (FR)**

## Description

L'invention concerne un dispositif de couplage entre une source de lumière émettant un rayonnement divergent et une fibre optique.

Le problème du couplage entre une source à rayonnement divergent et une fibre optique a été étudié dans le but d'augmenter la fraction de rayonnement captée par la fibre. Le couplage direct, dans lequel la source et la fibre sont simplement placées face à face sans élément optique intermédiaire, a une certaine efficacité qui peut être accrue, et le dispositif de couplage selon l'invention permet d'accroître les tolérances de connexion entre la source et la fibre.

A la suite du développement des transmissions par fibres optiques, de nombreux dispositifs directement utilisables par des non-spécialistes ont été étudiés. L'un de ceux-ci est une embase émettrice : il s'agit d'un boîtier contenant une source telle que, par exemple, une diode électroluminescente, et une fibre intermédiaire munie éventuellement d'une optique de couplage assurant une liaison optique entre l'intérieur et l'extérieur du boîtier et terminée par un connecteur de sortie.

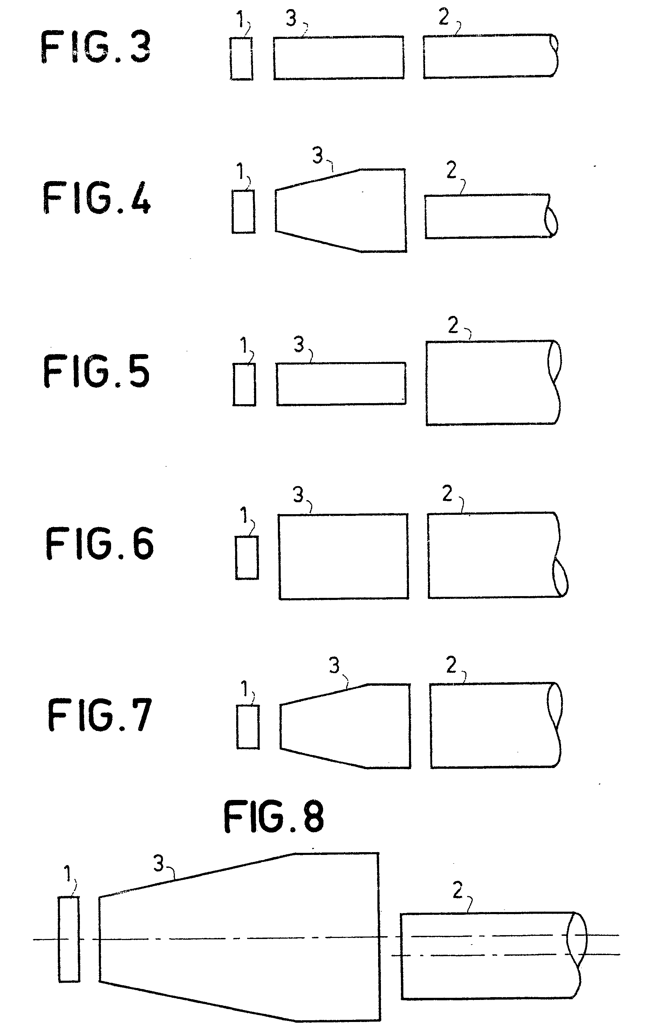

Un tel dispositif est décrit, par exemple, dans la demande de brevet européen EP-A-0 014 610. La structure enseignée est du type qui sera décrit dans la présente demande en relation avec la figure 3. Les sections de la fibre optique à coupler, de la face émissive de la source de lumière et de la fibre optique intermédiaire sont sensiblement égales.

Ces micro-optiques de couplage sont destinées en général à accroître le rendement de couplage entre la source de rayonnement divergent et la fibre de transmission. Une très grande partie de celles-ci ont été optimisées pour un laser semi-conducteur et une fibre de type « télécommunication », c'est-à-dire typiquement avec un diamètre de cœur de 50 μm et une ouverture numérique de 0,18. Quelques-unes sont adaptées à des diodes électroluminescentes de petit diamètre, par exemple 100 μm, et des fibres à gros diamètre de cœur, par exemple 200 μm.

En général, les fibres intermédiaires sont polies, et pour obtenir de faibles pertes au couplage source/fibre intermédiaire ou fibre intermédiaire/fibre de transmission, un positionnement dynamique ou de la mécanique de haute précision sont nécessaires, or il s'agit là de procédés onéreux.

Ainsi si l'on utilise un boîtier tel que défini précédemment, contenant une source et une fibre intermédiaire, si l'on veut limiter les pertes de couplage, les tolérances de positionnement source/fibre intermédiaire et fibre intermédiaire/fibre de transmission au niveau de la connexion, sont relativement faibles.

Un autre type connu de microoptique intermédiaire est constitué par un élément optique de couplage tronconique. Une structure de ce type est décrite dans la demande de brevet FR-A-2 178 173 et est illustrée dans la présente demande par la figure 7. Une telle structure permet d'effectuer une adaptation entre la section de la face émissive d'une source et la section d'une fibre optique de transmission de section plus importante.

L'invention a pour objet un dispositif de couplage entre une source lumineuse à rayonnement divergent présentant une surface d'émission prédéterminée et une fibre optique de transmission dont la face d'entrée présente une surface sensiblement égale à la surface d'émission de ladite source, ledit dispositif de couplage comprenant un composant optique intermédiaire discret présentant deux faces terminales opposées planes dont l'une est disposée en regard de la face d'émission de la source et l'autre en regard de la face d'entrée de la fibre de transmission, cette source et ce composant optique intermédiaire étant fixés sur un support de positionnement pour former une embase émettrice, et la surface d'émission de la source lumineuse et la surface de la face d'entrée du composant optique intermédiaire étant également des surfaces sensiblement égales, caractérisé en ce que ledit composant optique intermédiaire discret est un élément tronconique, dont la surface de la face de sortie a une valeur supérieure à celle de la surface de la face d'entrée de la fibre de transmission et dont l'ouverture numérique d'entrée est par ailleurs supérieure à celle de la fibre de transmission, ce qui permet ainsi d'élargir les tolérances d'alignement à la connexion élément tronconique-fibre de transmission, sans détériorer le rendement de couplage global entre la source et la fibre de transmission, par rapport au cas où ledit élément intermédiaire serait constitué par une fibre droite de surface de section droite égale à celle de la fibre de transmission.

L'originalité de la présente demande de brevet consiste ainsi à utiliser une optique conique intermédiaire de diamètre de sortie supérieur au diamètre de la fibre de transmission ce qui peut permettre sans détériorer le rendement de couplage entre la source et la fibre de transmission, d'augmenter les tolérances de positionnement de cette fibre de transmission par rapport à l'optique conique intermédiaire, c'est-à-dire de simplifier le connecteur de sortie.

Le dispositif de l'invention permet une simplification de la connectique entre l'embase émettrice et la fibre de transmission, et il permet, en outre, une stabilité de transmission dans une large gamme de températures jusqu'à des températures élevées.

L'invention sera mieux comprise au moyen de la description ci-après en se référant aux figures annexées parmi lesquelles :

la figure 1 représente le schéma simplifié du dispositif de l'invention ;

la figure 2 représente un aspect particulier du dispositif de l'invention ;

les figures 3 à 7   représentent les différentes configurations possibles de couplage entre une source lumineuse et une fibre optique de transmission (les figures 3, 5, 6, 7 représentant des configurations selon l'art connu, et la figure 4 la configuration selon l'invention) ;

la figure 8   représente le dispositif de l'invention ;

la figure 9   représente une courbe relative à un dispositif de l'art connu ;

la figure 10   représente une courbe relative au dispositif de l'invention.

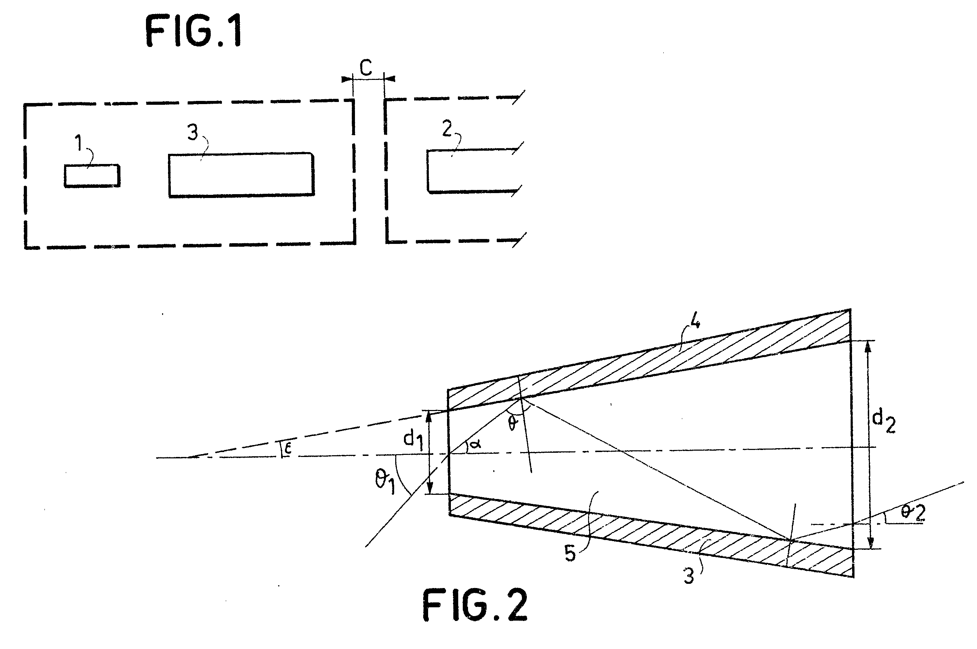

Selon l'état de l'art antérieur pour assurer le couplage source 1-fibre 2 on a été amené à introduire, comme représenté à la figure 1, un composant optique intermédiaire 3 permettant la continuité optique entre l'intérieur et l'extérieur de l'embase.

Si on considère une source de surface émissive Sd et d'angle d'émission $\Omega$d, et une fibre de surface de cœur Sft et d'angle d'acceptance $\Omega$ft, le produit S$\Omega$ doit être conservé pour obtenir un couplage maximum. Or $\Omega$d est en général grand par rapport à $\Omega$ft, on doit donc avoir : Sd < Sft pour conserver le rapport S$\Omega$.

Ce composant optique intermédiaire peut être par exemple un tronc de cône qui est un élément transformateur conservant le rapport S$\Omega$. C'est-à-dire que si l'on considère en entrée les valeurs Se surface d'entrée et $\Omega$e angle d'entrée, et $S_s$ surface de sortie et $\Omega_s$ angle de sortie on a : Se$\Omega$e = $S_s\Omega_s$.

Or un tronc de cône est un adaptateur d'ouverture numérique et permet, dans certains cas, d'augmenter la puissance optique couplée dans la fibre de transmission.

Sans tronc de cône, comme illustré à la figure 3, n'est couplée dans la fibre que l'énergie émise par la source dans un cône correspondant à l'acceptance de la fibre, de plus le niveau de connectique C n'est pas parfait.

Avec un tronc de cône, le couplage peut être tel qu'une grande partie de l'énergie émise par la source pénètre dans le tronc de cône et en ressort avec une ouverture numérique inférieure ou égale à celle de la fibre de transmission. Si le diamètre de sortie du tronc de cône est inférieur ou égal au diamètre de la fibre, on a ainsi augmenté le couplage par rapport à la solution précédente comme illustré à la figure 7.

La source et la micro-optique conique peuvent être rendues solidaires d'un support pour former une embase émettrice.

Deux configurations de tronc de cône sont possibles : un cône aux parois comportant un traitement réfléchissant ou bien un élément de fibre optique conique. On peut par exemple dans la suite considérer un élément de fibre conique. La méthode de calcul dans les deux cas reste la même. On constate que l'angle d'incidence $\theta$ sur l'interface cœur-gaine augmente à chaque fois d'un angle 2$\varepsilon$ à chaque réflexion, si $\varepsilon$ est le demi-angle au sommet du cône et si le rayon se propage comme à la figure 2 dans le sens d'une augmentation de diamètre du cône. L'angle d'acceptance $\theta_1$ est donc déterminé par la première réflexion. Géométriquement, on montre que

$$\frac{\pi}{2} = \theta + \alpha - \varepsilon.$$

Pour une fibre d'indices $n_c$ de cœur 5 et $n_g$ de gaine 4 donnés, on doit avoir pour obtenir la réflexion totale à l'interface cœur-gaine :

$$\theta \geqslant \theta_e = \text{Arcsin } n_g/n_c \text{ où } \theta_e \text{ est l'angle limite}$$

Soit, à la limite :

$$\frac{\pi}{2} - \alpha + \varepsilon = \theta_e.$$

De même, on peut relier l'ouverture numérique d'entrée ON1 du tronc de cône à l'ouverture numérique de sortie ON2 par :

$$n_1 \sin \theta_1 = ON_1 = \frac{d_2}{d_1} n_2 \sin \theta_2 = \frac{d_2}{d_1} ON_2$$

avec $n_1$ et $n_2$ indices des milieux d'entrée et de sortie du cône, et $d_1$ et $d_2$ les diamètres du cœur en entrée et en sortie du cône.

On considère alors diverses configurations de couplage entre la source 1 et la fibre de transmission 2, en utilisant une fibre intermédiaire de forme tronconique comme décrite précédemment, ou une fibre intermédiaire de forme cylindrique.

Pour une source émettrice 1 standard de 200 µm de surface active, la fibre de transmission 2 peut avoir un diamètre de cœur de 200 µm ou 400 µm. Les figures 3 à 7 indiquent les possibilités de couplage source/fibre de transmission.

Dans les cas considérés aux figures 3 et 5, l'emploi d'une fibre intermédiaire droite impose des tolérances serrées au couplage source/fibre intermédiaire, et aux figures 3 et 6 au couplage fibre intermédiaire/fibre de transmission.

3

Il est connu d'utiliser le montage illustré à la figure 3 pour les transmissions avec des fibres de transmission par exemple de 200 µm de diamètre de cœur. Dans ce cas, le diamètre de cœur de la fibre intermédiaire est de 180 µm.

Il est connu d'utiliser le montage illustré à la figure 6 pour les transmissions avec des fibres de transmission par exemple de 400 µm de diamètre de cœur. Dans ce cas, le diamètre de cœur de la fibre intermédiaire peut être de 350 µm, ce qui élargit les tolérances de positionnement au niveau source/fibre intermédiaire par rapport à la figure 4 et au niveau fibre intermédiaire/fibre de transmission comme à la figure 5.

Du point de vue mécanique, l'emploi d'une micro-optique conique permet :

— dans le cas selon l'invention de la figure 4 (utilisation avec une fibre de transmission de diamètre de cœur voisin de celui de la diode) d'augmenter notablement les tolérances de positionnement au niveau fibre intermédiaire/fibre de transmission, c'est-à-dire au niveau critique du connecteur détachable. Les autres tolérances sont inchangées ;

— dans le cas selon l'art connu de la figure 7, d'avoir des tolérances de positionnement identiques aux solutions classiques des figures 3 ou 5, pour le couplage avec la source et pour le couplage avec la fibre de transmission.

D'un point de vue énergétique, le couplage entre l'émetteur et la fibre de transmission a été calculé dans le cas particulier des fibres à échelon d'indice, à titre non limitatif, avec les hypothèses suivantes :

— la perte $\alpha$ à la connexion C entre deux fibres à échelon d'indice de diamètre $d_1$ et $d_2$, si $d_1$ diamètre du cœur de la fibre « émettrice » est plus grand que $d_2$ diamètre du cœur de la fibre « réceptrice », varie en $(d_2/d_1)^2$, soit en décibels :

$$\alpha = 20 \, \text{Log} \, \frac{d_1}{d_2}$$

— la perte $\alpha$ à la connexion C entre deux fibres à échelon d'indice d'ouverture numérique ON1 et ON2, si ON1 celle de la fibre « émettrice » est plus grande que celle ON2 de la fibre « réceptrice », varie en $(ON2/ON1)^2$, soit en décibels :

$$\alpha = 20 \, \text{Log} \, \frac{ON_1}{ON_2} \, .$$

Il s'agit d'approximations qui donnent ici des ordres de grandeur conformes aux résultats expérimentaux. D'autre part, on ne tient pas compte des pertes par réflexions et on suppose les éléments coaxiaux sauf dans le cas de la figure 4 où ils ne devront n'être qu'en regard.

Soit une micro-optique de couplage constituée par un élément de fibre de forme tronconique avec en entrée une diode de diamètre de surface active $d_D$, ladite fibre tronconique ayant en entrée un diamètre de cœur $D_{EC}$ et une ouverture numérique $ON_{EC}$ et en sortie un diamètre de cœur $D_{SC}$ et une ouverture numérique $ON_{SC}$, et soit une fibre de transmission de diamètre de cœur $D_{FT}$ et d'ouverture angulaire $ON_{FT}$.

Si $D_{EC}$ est supérieur ou égal à $d_D$, et si $P_E$ est la puissance totale émise par la diode, la puissance couplée $P_C$ dans le cône vaut :

$$P_C = P_E \times ON_{EC}{}^2$$

cette relation est d'ailleurs valable pour une fibre intermédiaire non conique mais en utilisant une source à rayonnement lambertien tel qu'une diode photoémissive et non un laser.

En général, pour coupler le maximum d'énergie dans la fibre de transmission on cherche à avoir la relation :

$$ON_{SC} = ON_{EC} \times \frac{D_{EC}}{D_{SC}} \leq ON_{FT} \, ,$$

et $D_{EC}$ voisin du diamètre de la diode $d_D$.

Dans ce cas, si le diamètre du cœur en sortie de cône soit $D_{SC}$ est inférieur ou égal à celui $D_{FT}$ de la fibre de transmission, la puissance optique couplée dans celle-ci vaut :

$$P_{FT} \simeq P_E \times ON_{FT}^2 \times \left( \frac{D_{SC}}{D_{EC}} \right)^2 \, .$$

L'utilisation d'un cône comme illustré à la figure 7 se traduit donc par un gain dans le rapport $(D_{SC}/D_{EC})^2$ par rapport au couplage du type de la figure 3.

Dans le cas de la figure 8 :

$$P_{FT} \simeq P_E \times ON_{FT}^2 \left(\frac{D_{FT}}{D_{EC}}\right)^2.$$

Il est ainsi intéressant de noter que si le diamètre du cœur de la fibre de transmission est au moins égal au diamètre du cœur du cône à son entrée, donc à celui de la diode, par rapport au couplage direct au type de la figure 3, la valeur de $P_{FT}$ est au moins équivalente.

De plus avec les surfaces $S_D$, surface de la source, et $S_{EC}$, surface d'entrée du cône, on peut prendre $S_{EC} > S_D$ pour tenir compte des imprécisions de positionnement du cône par rapport à la source.

Pour une configuration selon l'art connu où, comme représenté à la figure 7, le diamètre de la source $d_D$ est plus petit que le diamètre du cœur de la fibre de transmission $D_{FT}$, on obtient un gain au couplage. En utilisant une micro-optique intermédiaire, comme représenté à la figure 7, pour un rapport 2 entre $D_{EC}$ et $D_{FT}$, le gain théorique au couplage source/fibre de transmission, par rapport à une fibre intermédiaire droite, est de 6 dB. Expérimentalement, on obtient de 4,8 à 5,3 dB. Pour une configuration où, comme représenté à la figure 4, les deux diamètres $d_D$ et $D_{FT}$ sont équivalents, on obtient un élargissement des tolérances à la connexion en sortie d'embase. Ce dernier dispositif représente le dispositif de l'invention où la fibre de transmission 2 et l'ensemble source 1-fibre intermédiaire 3 peuvent ne pas être coaxiaux.

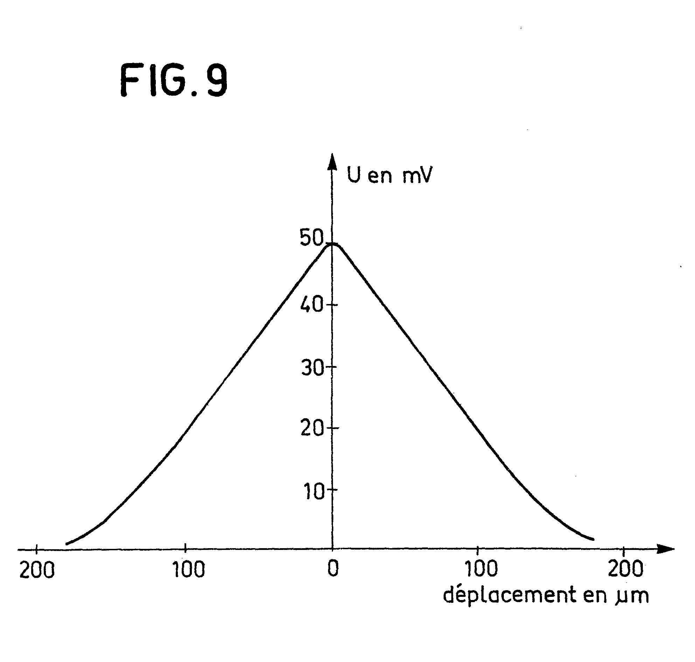

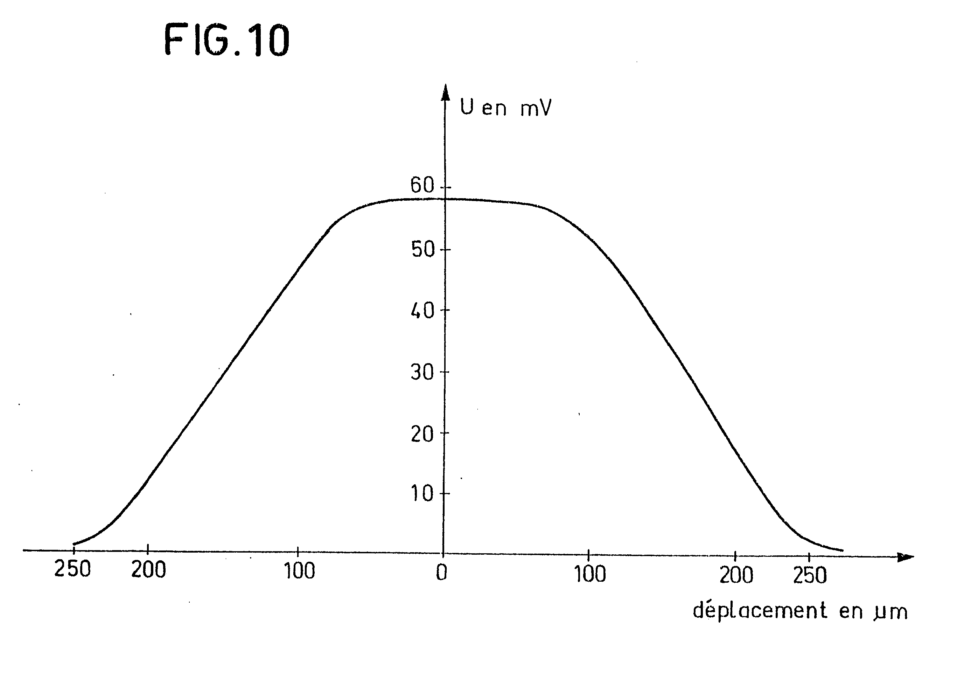

L'allure de l'évolution du signal couplé dans une fibre de transmission en fonction du mésalignement axial est donnée à la figure 9 si la fibre intermédiaire est droite (cas de la figure 3), à la figure 10 si la fibre intermédiaire est conique (cas des figures 4 et 8).

Dans le premier cas, on provoque une perte de 10 % du signal par un mésalignement de $\pm 35$ $\mu$m. Dans le second cas, cette tolérance atteint $\pm 90$ $\mu$m.

Dans le cas considéré à la figure 9 la fibre intermédiaire droite a un diamètre de cœur de 200 $\mu$m, et dans le cas considéré à la figure 10 la fibre intermédiaire tronconique a deux diamètres de cœur d'entrée et de sortie de 200 $\mu$m et 350 $\mu$m.

Il est donc possible de réaliser une embase émettrice (pourvue d'une source émettrice standard de 200 $\mu$m de surface active) qui soit compatible avec des fibres de transmission de 200 $\mu$m de diamètre de cœur, avec dans ce cas des tolérances à la connexion élargies. Pour cela, il conviendra de remplacer les monofibres intermédiaires droites par une fibre intermédiaire conique 200 $\mu$m/350 $\mu$m. Il sera toujours possible d'adapter les caractéristiques du cône pour réaliser un compromis entre le couplage et les possibilités de la mécanique, par exemple en augmentant son diamètre d'entrée pour élargir les tolérances de positionnement au niveau source/fibre conique.

## Revendications

1. Dispositif de couplage entre une source lumineuse (1) à rayonnement divergent présentant une surface d'émission prédéterminée et une fibre optique de transmission (2) dont la face d'entrée présente une surface sensiblement égale à la surface d'émission de ladite source, ledit dispositif de couplage comprenant un composant optique intermédiaire discret (3) présentant deux faces terminales opposées planes dont l'une est disposée en regard de la face d'émission de la source (1) et l'autre en regard de la face d'entrée de la fibre de transmission (2), cette source (1) et ce composant optique intermédiaire (3) étant fixés sur un support de positionnement pour former une embase émettrice, et la surface d'émission de la source lumineuse (1) et la surface de la face d'entrée du composant optique intermédiaire (3) étant également des surfaces sensiblement égales, caractérisé en ce que ledit composant optique intermédiaire discret (3) est un élément tronconique, dont la surface de la face de sortie a une valeur supérieure à celle de la surface de la face d'entrée de la fibre de transmission (2) et dont l'ouverture numérique d'entrée ($ON_{EC}$) est par ailleurs supérieure à celle ($ON_{FT}$) de la fibre de transmission, ce qui permet ainsi d'élargir les tolérances d'alignement à la connexion élément tronconique-fibre de transmission, sans détériorer le rendement de couplage global entre la source et la fibre de transmission, par rapport au cas où ledit élément intermédiaire serait constitué par une fibre droite de surface de section droite égale à celle de la fibre de transmission.

2. Dispositif selon la revendication 1, caractérisé en ce que l'élément tronconique (3) est un élément de fibre optique conique.

3. Dispositif selon la revendication 1, caractérisé en ce que l'élément tronconique (3) est un tronc de cône aux parois comportant un traitement réfléchissant.

4. Dispositif selon la revendication 1, caractérisé en ce que la source lumineuse (1) est une diode électroluminescente.

## Claims

1. Device of the coupling between a luminous source (1) having a divergent radiation and a predetermined emission surface and an optical transmission fiber (2) the entrance face of which has a surface which is substantially equal to the emission surface of said source, said coupling device comprising an optical intermediate discrete component (3) having two opposed plane end faces one of which is arranged in facing relationship to the emission face of the source (1) and the other of which is arranged in facing relationship to the entrance face of the transmission fiber (2), this source (1) and this optical intermediate component (3) being secured on a positioning carrier to form an emitting base, and the emission surface of the luminous source (1) and the surface of the entrance face of the optical intermediate component (3) being likewise substantially equal surfaces, characterized in that said optical intermediate discrete component (3) is an element shaped as a truncated cone the surface of the output face of which has a value exceeding that of the surface of the entrance face of the transmission fiber (2) and the numerical input opening ($ON_{EC}$) of which exceeds that ($ON_{FT}$) of the transmission fiber, thus permitting to enlarge the alignment tolerances at the connection between the truncated cone element and the transmission fiber without impairing the efficiency of the total coupling between the source and the transmission fiber compared to the case where said intermediate element would be formed by a straight fiber having a cross sectional surface equal to that of the transmission fiber.

2. Device according to claim 1, characterized in that the truncated cone element (3) is a conical optical fiber element.

3. Device according to claim 1, characterized in that the truncated cone element (3) is a truncated cone having walls comprising a reflecting treatment.

4. Device according to claim 1, characterized in that the luminous source (1) is an electroluminescent diode.

**Patentansprüche**

1. Vorrichtung zur Kopplung zwischen einer Lichtquelle (1) mit divergierender Strahlung, welche eine vorbestimmte Austrittsoberfläche aufweist, und einer optischen Übertragungsfaser (2), deren Eintrittsfläche eine Oberfläche aufweist, die im wesentlichen gleich der Austrittsfläche der genannten Quelle ist, wobei die Kopplungsvorrichtung ein diskretes optisches Zwischenbauteil (3) umfaßt, das zwei einander gegenüberliegende ebene Endflächen aufweist, wovon die eine gegenüber der Austrittsfläche der Quelle (1) und die andere gegenüber der Eintrittsfläche der Übertragungsfaser (2) angeordnet ist, wobei ferner diese Quelle (1) und dieses optische Zwischenbauteil (3) auf einem Positionierhalter befestigt sind, um einen Austrittssockel zu bilden, und wobei die Austrittsfläche der Lichtquelle (1) und die Oberfläche der Eintrittsfläche des optischen Zwischenbauteils (3) ebenfalls im wesentlichen gleiche Oberflächen sind, dadurch gekennzeichnet, daß das genannte diskrete optische Zwischenbauteil (3) ein kegelstumpfförmiges Element ist, bei dem die Oberfläche der Austrittsfläche einen Wert aufweist, der größer als der der Oberfläche der Eintrittsfläche der Übertragungsfaser (2) ist und deren numerische Eintrittsöffnung ($ON_{EC}$) weiterhin größer als die ($ON_{FT}$) der Übertragungsfaser ist, wodurch es ermöglicht wird, auf diese Weise die Ausrichtungstoleranzen bei der Verbindung zwischen dem kegelstumpfförmigen Element und der Übertragungsfaser zu vergrößern, ohne den globalen Kopplungsgrad zwischen der Quelle und der Übertragungsfaser zu verschlechtern gegenüber dem Fall, wo das genannte Zwischenelement ersetzt wäre durch eine gerade Faser mit geradem Querschnitt, welcher gleich dem der Übertragungsfaser ist.

2. Vorrichtung nach Anspruch 1, dadurch gekennzeichnet, daß das kegelstumpfförmige Element (3) ein konisches optisches Faserelement ist.

3. Vorrichtung nach Anspruch 1, dadurch gekennzeichnet, daß das kegelstumpfförmige Element (3) ein Kegelstumpf ist, dessen Wände eine reflektierende Bearbeitung erfahren haben.

4. Vorrichtung nach Anspruch 1, dadurch gekennzeichnet, daß die Lichtquelle (1) eine Leuchtdiode ist.

# FIG.1

# FIG.2

FIG.3

1  3  2

FIG.4

1  3  2

FIG.5

1  3  2

FIG.6

1  3  2

FIG.7

1  3  2

FIG.8

1  3  2

0 083 527

FIG.9

FIG.10